# EUROPÄISCHE PATENTANMELDUNG

(11) **EP 0 854 227 A2**
(43) Veröffentlichungstag der Anmeldung: **22.07.1998**
(21) Anmeldenummer: 97120708.9
(22) Anmeldetag: 26.11.1997
(51) Int. Cl.: D21F 1/40

(54) **Walze für eine Maschine zur Herstellung einer Faserstoffbahn**

(30) Priorität: 23.12.1996 DE 19654199
(71) Anmelder: Voith Sulzer Papiermaschinen GmbH, 89509 Heidenheim (DE)
(72) Erfinder: Schiel, Christian, 82418 Murnau (DE)

(57) **Zusammenfassung**

Eine Walze (10) für eine Maschine zur Herstellung einer Faserstoffbahn, insbesondere Papier- und/oder Kartonbahn, ist mit einem rotierbaren flexiblen Walzenmantel (20) versehen. Am Außenumfang eines den Walzenmantel (20) durchsetzenden drehfesten Tragrohres (12) sind mehrere in Umfangsrichtung des Tragrohres (12) hintereinander liegende Stützrollen (24) vorgesehen, die um ihre zur Walzenachse (26) parallele Achsen drehbar am Tragrohr (12) gelagert sind und durch die der um das Tragrohr (12) rotierbare Walzenmantel (20) zumindest bereichsweise abgestützt ist.

## Beschreibung

Die Erfindung betrifft eine Walze für eine Maschine zur Herstellung einer Faserstoffbahn, insbesondere Papier- und/oder Kartonbahn, mit einem rotierbaren flexiblen Walzenmantel.

Um dem Durchhang oder der Durchbiegung von Walzen bei den zunehmend breiter werdenden Papiermaschinen zu begegnen, waren bisher Walzen mit zunehmend größerem Durchmesser erforderlich. Zudem weisen die bisher üblichen Walzen mit flexiblem Walzenmantel den Nachteil auf, daß sie nur entsprechend einem relativ geringen Umschlingungswinkel von einem jeweiligen Filzband und/oder dergleichen umschlungen sein können und darum nur in Schuhpressen als Schuhpreßwalzen eingesetzt werden.

Ziel der Erfindung ist es, eine Walze der eingangs genannten Art zu schaffen, die bei relativ kompaktem Aufbau, d.h. verringertem Durchmesser, insbesondere auch für breitere Papiermaschinen geeignet ist und im Fall einer Umschlingung durch ein Band wie insbesondere ein Filzband, ein Siebband, ein Preßband und/oder dergleichen erforderlichenfalls auch größere Umschlingungswinkel ermöglicht.

Die Aufgabe wird nach der Erfindung dadurch gelöst, daß am Außenumfang eines den Walzenmantel durchsetzenden drehfesten Tragrohres mehrere in Umfangsrichtung des Tragrohres hintereinander liegende Stützrollen vorgesehen sind, die um ihre zur Walzenachse parallele Achsen drehbar am Tragrohr gelagert sind und durch die der um das Tragrohr rotierbare Walzenmantel zumindest bereichsweise abgestützt ist.

Aufgrund dieser Ausbildung wird insbesondere bei breiteren und schnellen Papiermaschinen der jeweilige Platzbedarf, d.h. der Durchmesser deutlich verringert. Trotz des flexiblen Walzenmantels sind erforderlichenfalls auch größere Umschlingungswinkel möglich. Beispielsweise bei der Verwendung einer betreffenden Walze als Anpreßwalze in einer Tissue-Papiermaschine kann der Filz mit einem großen Vorumschlingungsbogen dem Preßschuh in der Preßzone zugeführt werden, der dann eine gleichmäßigere Anpressung erzeugt als normale Anpreßwalzen. Im Ergebnis lassen sich so höhere Trockengehalte für die zu behandelnde Faserstoffbahn erzielen.

Bei der in der Praxis bevorzugten Ausführungsform sind jeweils mehrere in Richtung der Walzenachse hintereinander liegende Stützrollen vorgesehen, um mehrere in Umfangsrichtung des Tragrohres hintereinander liegende axiale Reihen von Stützrollen zu bilden.

Das Verhältnis zwischen der Länge einer jeweiligen einzelnen Stützrolle und deren Durchmesser liegt vorzugsweise in einem Bereich von etwa 7 bis etwa 15.

Bei einer praktischen zweckmäßigen Ausführung sind zwischen den Stützrollen einer jeweiligen Stützrollenreihe und vorzugsweise auch im Bereich der äußeren Enden der axial äußeren Stützrollen Abstützböcke vorgesehen, die am Außenumfang des Tragrohres angeordnet und an denen die Lager für die Stützrollen befestigt sind. Die Lager könne natürlich auch zwischen den Walzen angeordnet werden. Ein Durchhängen des Preßmantels im Zwischenraum zwischen zwei Stützrollen tritt überraschenderweise nicht auf, wenn der Mantel mit ausreichender Biegesteifigkeit gefertigt wird. Durch die ihm aufgezwungene Krümmung in Umfangsrichtung wird er in Querrichtung ausgesteift.

Die Stützrollen umfassen vorteilhafterweise jeweils einen Rohrmantel, der durch Lager auf Zapfen abgestützt ist, die vorzugsweise an den Abstützböcken befestigt sind.

Die Oberfläche der Stützrollen ist zur Vermeidung größerer Unterdrücke im sich öffnenden Zwickel mit Rillen versehen. Dabei wird der sog. "Registerwalzeneffekt unterbunden.

Bei der in der Praxis bevorzugten Ausführungsform ist wenigstens ein Abstreifer vorgesehen, um überschüssiges Schmieröl von der Innenseite des Walzenmantels abzustreifen. Dieser Abstreifer ist zweckmäßigerweise an dem Tragrohr befestigt.

Es kann auch eine Reihe von Stützrollen, z.B. ohne Rillen, radial weiter außen stehend, usw., als Abstreifer benutzt werden.

Im Bereich des Abstreifers kann wenigstens eine Rücklaufleitung vorgesehen sein, um das von dem Abstreifer stammende Schmieröl in das Walzeninnere zu leiten, von wo es schließlich seitlich herausgeführt wird.

Gemäß einer besonders vorteilhaften praktischen Ausführungsform ist am Außenumfang des Tragrohres außer den Stützrollen wenigstens eine Preßeinrichtung vorgesehen, durch die ein zugeordneter Preßschuh beaufschlagbar ist, um den über den Preßschuh geführten Walzenmantel gegen eine Gegenfläche zu pressen.

Das Tragrohr kann hinreichend steif sein, so daß eine zusätzliche Abstützung dieses Tragrohres im Mittelbereich nicht erforderlich ist.

Demgegenüber ist bei einer zweckmäßigen Ausführungsvariante der erfindungsgemäßen Walze das Tragrohr von einem zusätzlich vorgesehenen drehfesten Träger durchsetzt. Das Tragrohr und der Träger sind endseitig miteinander verbunden. Zwischen dem Tragrohr und dem Träger ist vorzugsweise wenigstens ein Stützelement vorgesehen, durch das das Tragrohr radial am Träger abgestützt ist.

Dabei kann wenigstens ein Stützelement zur Einstellung einer jeweiligen gegenseitigen radialen Verspannung von Tragrohr und Träger verstellbar sein.

Zweckmäßigerweise sind mehrere in Umfangsrichtung des Trägers hintereinander liegende Stützelemente vorgesehen.

Bei einer in der Praxis bevorzugten Ausführungsform sind mehrere in Richtung der Walzenachse hintereinander liegende Stützelemente vorgesehen, um wenigstens eine axiale Reihe von Stützelementen zu bilden.

Gemäß einer besonders vorteilhaften Ausführungsform ist wenigstens ein Stützelement durch eine Stellschraube gebildet. Diese kann beispielsweise in eine in dem Tragrohr vorgesehene radiale Gewindebohrung eingesetzt sein.

Zweckmäßigerweise kann wenigstens ein Stützelement durch ein Kraftelement wie insbesondere eine Zylinder/Kolben-Einheit oder dergleichen gebildet sein.

Bei einer in der Praxis bevorzugten Ausführungsform ist wenigstens ein verstellbares Stützelement zur Einstellung einer jeweiligen Durchbiegung des Tragrohres vorgesehen.

Zweckmäßigerweise ist auch der das Tragrohr durchsetzende drehfeste Träger rohrförmig ausgebildet.

Der Walzenmantel kann an seinen Enden durch rotierbare Spannscheiben verschlossen sein.

Die erfindungsgemäße Walze kann mit besonderem Vorteil beispielsweise als Leitwalze für ein Band wie insbesondere ein Filzband, ein Siebband und/oder dergleichen verwendet werden.

Zudem ist eine Verwendung der Walze als Preßwalze denkbar.

Von besonderem Vorteil ist auch die Verwendung der erfindungsgemäßen Walze als einem Trockenzylinder zugeordnete Anpreßwalze in einer Maschine zur Herstellung einer Tissue- oder Hygienepapierbahn.

Der innere Träger kann bei Anwendungen mit im Betrieb etwa gleichmäßiger Belastung eingespart werden, wenn das Tragrohr entgegen der Belastung unter Betriebslast um den Betrag der Durchbiegung vorgebogen wird. Es können auch nur die Stützrollen im Polygon in Annäherung unter Betriebslast angeordnet sein.

Die Erfindung wird im folgenden anhand von Ausführungsbeispielen unter Bezugnahme auf die Zeichnung näher erläutert; in dieser zeigen:
- Figur 1: eine schematische, teilweise geschnittene Darstellung einer als Leitwalze dienenden Walze mit einem zusätzlichen drehfesten Träger,
- Figur 2: eine schematische, teilweise geschnittene Darstellung einer als Anpreßwalze dienenden, mit einem Preßschuh versehenen Walze ohne zusätzlichen Träger,
- Figur 3: eine schematische, teilweise geschnittene Teildarstellung einer Stützrolle,
- Figur 3A: ein Detail der in Figur 3 gezeigten Stützrolle und
- Figur 4: eine schematische Darstellung einer Tissue- oder Hygienepapiermaschine mit einer einem Trockenzylinder zugeordneten Anpreßwalze.

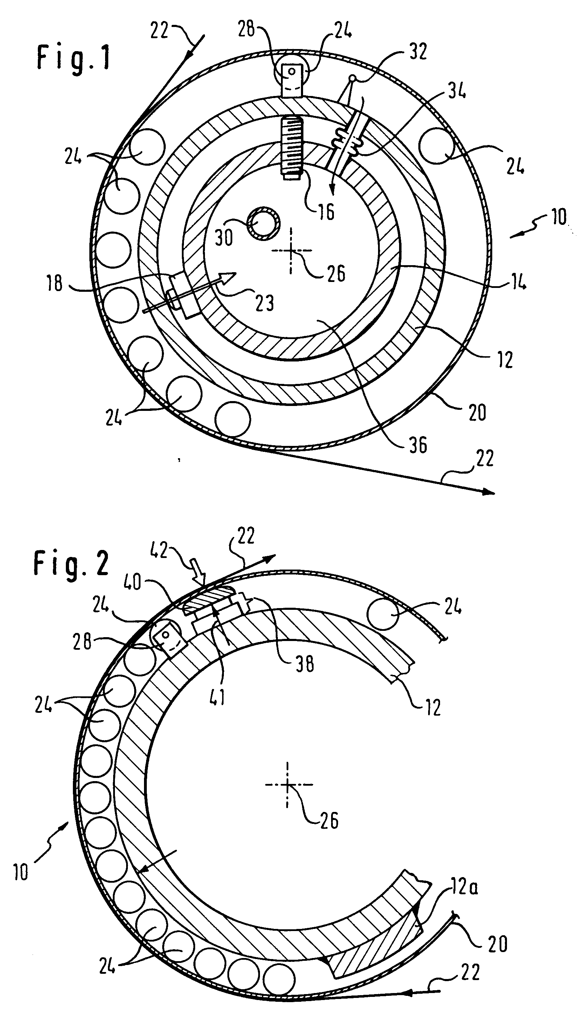

Fig. 1 zeigt in schematischer, teilweise geschnittener Darstellung eine Walze 10, die in einer Maschine zur Herstellung einer Faserstoffbahn, insbesondere Papier- und/oder Kartonbahn als Leitwalze für ein Band 12 wie insbesondere ein Filzband, ein Siebband, ein Preßband und/oder dergleichen dient.

Die Walze 10 umfaßt ein sich zumindest im wesentlichen über die gesamte Maschinenbreite erstreckendes drehfestes Tragrohr 12 und einen dieses durchsetzenden drehfesten Träger 14, der beim dargestellten Ausführungsbeispiel ebenfalls rohrförmig ausgebildet ist.

Das Tragrohr 12 und der Träger 14 sind im Bereich ihrer Enden miteinander verbunden.

Zwischen dem Tragrohr 12 und dem Träger 14 sind Stützelemente, im vorliegenden Fall Stellschrauben 16 und Kraftelemente 18 vorgesehen, durch die das Tragrohr 12 an den betreffenden Stellen radial am Träger 14 abgestützt ist. Im vorliegenden Fall sind die Kraftelemente 18 durch Zylinder/Kolben-Einheiten gebildet.

Durch diese verstellbaren, die Stellschrauben 16 und die Kraftelemente 18 umfassenden Stützelemente können das Tragrohr 12 und der ebenfalls rohrförmige Träger 14 beispielsweise so gegeneinander verspannt werden, daß sie sich in der Mitte in entgegengesetzter Richtung verbiegen.

Durch eine oder mehrere Stellschrauben 16 kann die aufgrund des Eigengewichtes sowie von Zusatzmassen auftretende Durchbiegung des Tragrohres 12 teilweise, vollständig oder auch überkompensiert werden.

Durch ein oder mehrere Kraftelemente 18 wird einer Durchbiegung des Tragrohres 12 entgegengewirkt, die im vorliegenden Fall durch eine Betriebskraft bedingt ist, die durch ein einen flexiblen Walzenmantel 20 der Walze 10 umschlingendes Band 22 hervorgerufen wird. Die durch diese, in Fig. 1 durch den Pfeil 23 angedeutete Betriebskraft bedingte Durchbiegung des Tragrohres 12 kann somit über die Kraftelemente 18 eingestellt werden.

Der rotierbare flexible Walzenmantel 20 wir durch mehrere am Umfang des Tragrohres 12 montierte drehbare Stützrollen 24 getragen. Hierbei sind die Stützrollen 24 jeweils um zur Walzenachse 26 parallele Achsen drehbar.

Es sind jeweils mehrere in Richtung der Walzenachse 26 hintereinander liegende Stützrollen 24 vorgesehen, so daß mehrere in Umfangsrichtung des Tragrohres 12 hintereinander liegende axial Reihen von Stützrollen 24 gebildet werden.

Das Verhältnis zwischen der Länge einer jeweiligen Stützrolle 24 und deren Durchmesser liegt im vorliegenden Fall in einem Bereich von etwa 7 bis etwa 15.

Zwischen den Stützrollen 24 einer jeweiligen Stützrollenreihe und vorzugsweise auch im Bereich der äußeren Enden der axial äußeren Stützrollen sind Abstützböcke 28 vorgesehen, an denen die Lagerungen der Stützrollen 24 befestigt sind.

Die Oberfläche der Stützrollen 24 ist für den Durchlaß von Schmieröl mit Rillen versehen. Die Rillen verhindern auch den sogenannten Registerwalzeneffekt, d.h. das Entstehen eines Unterdruckgebietes im sich öffnenden Zwickel zwischen Stützrolle und Walzenmantel.

Das für die Lager der Stützrollen 24 benötigte Schmieröl wird über eine durch den Träger 14 geführte Leitung 30 zugeführt. Die Verteilung des Schmieröls auf die verschiedenen Rollenlager 24 ist hier nicht dargestellt.

Ein Abstreifer 32 streift überschüssiges Öl von der Innenseite des flexiblen Walzenmantels 20 ab und leitet es durch Rücklaufleitungen 34 in den Hohlraum 36 des drehfesten Trägers 14. Das betreffende Öl wird schließlich seitlich aus der Maschine herausgeführt.

Der flexible Walzenmantel 20 kann an den Enden durch rotierbare, hier nicht dargestellte Spannscheiben verschlossen sein.

Fig. 2 zeigt eine schematische, teilweise geschnittene Darstellung einer als Anpreßwalze verwendbaren Walze ohne zusatzlichen drehfesten Träger. In diesem Fall ist das Tragrohr 12 hinreichend steif, so daß die Durchbiegungsbeeinflussung mittels eines zusätzlichen, in Fig. 1 mit 14 bezeichneten Trägers nicht erforderlich ist. Das Tragrohr kann durch eine (auch unter Zugspannung) angeschweißte Längsrippe 12a verstärkt bzw. entgegen der Belastungsrichtung vorgespannt werden.

Zusätzlich zu den den flexiblen Walzenmantel 20 und das darüber laufende Band 22 abstützenden Stützrollen 24 ist auf dem Tragrohr 12 eine Preßeinrichtung 38 vorgesehen, durch die ein zugeordneter Preßschuh 40 in Richtung des Pfeiles 41 beaufschlagbar ist, um den über den Preßschuh 40 geführten flexiblen Walzenmantel 20 gegen eine Gegenfläche zu pressen, deren resultierende Gegenkraft in Fig. 2 durch den Pfeil 42 angedeutet ist.

Zwischen den Stützrollen 28 einer jeweiligen Stützrollenreihe und im Bereich der äußeren Enden der äußeren Stützrollen sind wiederum am Außenumfang des Tragrohres 12 angebrachte Abstützböcke 28 angeordnet, in denen die Lagerungen der Stützrollen 24 befestigt sind.

Wie der Fig. 2 entnommen werden kann, sind in dem von dem Band 22 umschlungenen Bereich der Walze 10 mehrere, mit geringem Abstand voneinander angeordnete Stützrollen 24 vorgesehen, während die Anzahl von Stützrollen auf der gegenüberliegenden Seite deutlich geringer ist.

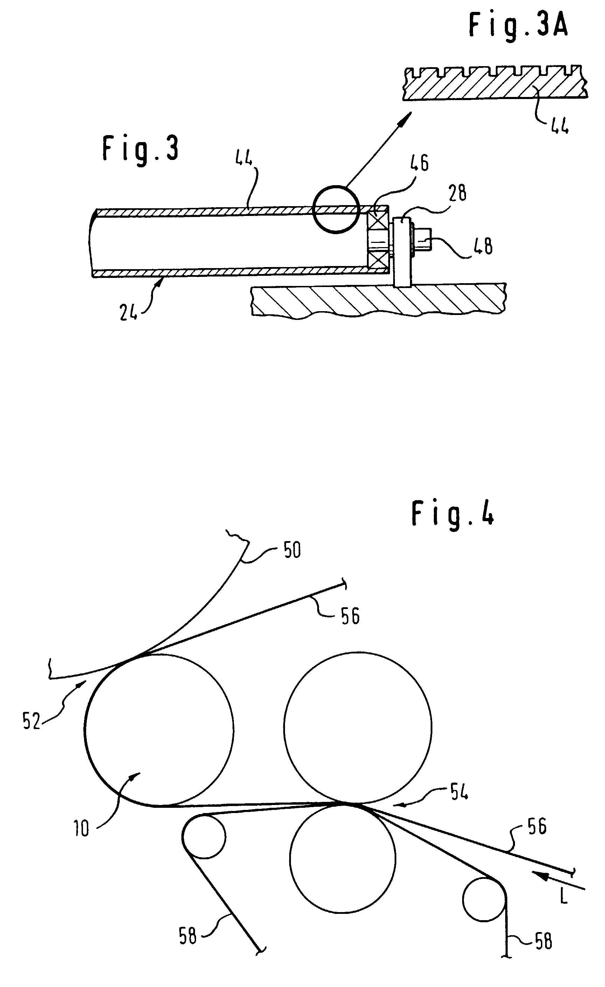

Fig. 3 zeigt eine schematische, teilweise geschnittene Teildarstellung einer einzelnen Stützrolle 24. Danach besteht eine solche Stützrolle 24 aus einem Rohrmantel 44, der von Lagern 46 auf Zapfen 48 getragen ist, die an Abstützböcken 28 befestigt sind.

In Figur 3A ist die Wand des Walzenrohres 24 im Schnitt mit Rillen gezeigt, die außen im wesentlichen in Umfangsrichtung verlaufen. Die Rillen sind typischerweise 1 mm breit bei 3 mm Teilung.

Fig. 4 zeigt eine schematische Teildarstellung einer Tissue- oder Hygienepapiermaschine mit einer einem Trockenzylinder 50 zugeordneten Anpreßwalze, die durch eine erfindungsgemäße Walze 10 der zuvor beschriebenen Art gebildet ist.

Beim in dieser Fig. 4 dargestellten Ausführungsbeispiel ist in Bahnlaufrichtung L vor der durch die erfindungsgemäße Anpreßwalze 10 und den Trockenzylinder 50 gebildeten Hauptpresse 52 eine Vorpresse 54 vorgesehen, die im Gegensatz zur einfach befilzten Hauptpresse doppelt befilzt ist. Dabei ist ein Obertuch 56 sowohl durch die Vorpresse 54 als auch durch die Hauptpresse 52 geführt. Wie der Fig. 4 entnommen werden kann, ist zusätzlich ein Unterfilz 58 vorgesehen, der zusätzlich durch die Vorpresse 54 geführt ist.

### Bezugszeichenliste

- 10: Walze
- 12: Tragrohr
- 12a: Längsrippe
- 14: Träger
- 16: Stellschrauben
- 18: Kraftelemente
- 20: Walzenmantel
- 22: Band
- 23: Betriebskraft
- 24: Stützrollen
- 26: Walzenachse
- 28: Abstützböcke
- 30: Leitung
- 32: Abstreifer
- 34: Rücklaufleitung
- 36: Walzeninneres, Hohlraum
- 38: Preßeinrichtung
- 40: Preßschuh
- 41: Pfeil
- 42: Pfeil
- 44: Rohrmantel
- 46: Lager
- 48: Zapfen
- 50: Trockenzylinder
- 52: Hauptpresse
- 54: Vorpresse
- 56: Obertuch
- 58: Unterfilz
- L: Bahnlaufrichtung

## Patentansprüche

1. Walze für eine Maschine zur Herstellung einer Faserstoffbahn, insbesondere Papier- und/oder Kartonbahn, mit einem rotierbaren flexiblen Walzenmantel (20),
dadurch **gekennzeichnet,**
daß am Außenumfang eines den Walzenmantel (20) durchsetzenden drehfesten Tragrohres (12) mehrere in Umfangsrichtung des Tragrohres (12) hintereinander liegende Stützrollen (24) vorgesehen sind, die um ihre zur Walzenachse (26) parallele Achsen drehbar am Tragrohr (12) gelagert sind und durch die der um das Tragrohr (12) rotierbare Walzenmantel (20) zumindest bereichsweise abgestützt ist.

2. Walze nach Anspruch 1,
dadurch **gekennzeichnet,**
daß jeweils mehrere in Richtung der Walzenachse (26) hintereinander liegende Stützrollen (24) vorgesehen sind, um mehrere in Umfangsrichtung des Tragrohres (12) hintereinander liegende axiale Reihen von Stützrollen (24) zu bilden.

3. Walze nach Anspruch 1 oder 2,
dadurch **gekennzeichnet,**
daß das Verhältnis zwischen der Länge einer jeweiligen Stützrolle (24) und deren Durchmesser in einem Bereich von etwa 7 bis etwa 15 liegt.

4. Walze nach einem der vorhergehenden Ansprüche,
dadurch **gekennzeichnet,**
daß zwischen den Stützrollen (24) einer jeweiligen Stützrollenreihe und vorzugsweise auch im Bereich der äußeren Enden der axial äußeren Stützrollen (24) Abstützböcke (28) vorgesehen sind, die am Außenumfang des Tragrohres (12) angeordnet und an denen die Lager (46) für die Stützrollen (24) befestigt sind.

5. Walze nach einem der vorhergehenden Ansprüche,
dadurch **gekennzeichnet,**
daß die Stützrollen (24) jeweils einen Rohrmantel (44) umfassen, der durch Lager (46) auf Zapfen (48) abgestützt ist, die vorzugsweise an den Abstützböcken (28) befestigt sind.

6. Walze nach einem der vorhergehenden Ansprüche,
dadurch **gekennzeichnet,**
daß die Oberfläche der Stützrollen (24) für den Durchlaß von Schmieröl mit Rillen versehen ist.

7. Walze nach einem der vorhergehenden Ansprüche,
dadurch **gekennzeichnet,**
daß wenigstens ein Abstreifer (32) vorgesehen ist, um überschüssiges Schmieröl von der Innenseite des Walzenmantels (20) abzustreifen.

8. Walze nach Anspruch 7,
dadurch **gekennzeichnet,**
daß der Abstreifer (32) an dem Tragrohr (12) befestigt ist.

9. Walze nach Anspruch 7 oder 8,
dadurch **gekennzeichnet,**
daß im Bereich des Abstreifers (32) wenigstens eine Rücklaufleitung (34) vorgesehen ist, um das von dem Abstreifer (32) stammende Schmieröl in das Walzeninnere (36) zu leiten, von wo es schließlich seitlich herausgeführt wird.

10. Walze nach einem der vorhergehenden Ansprüche,
dadurch **gekennzeichnet,**
daß am Außenumfang des Tragrohres (12) außer den Stützrollen (24) wenigstens eine Preßeinrichtung (38) vorgesehen ist, durch die ein zugeordneter Preßschuh (40) beaufschlagbar ist, um den über den Preßschuh (40) geführten Walzenmantel (20) gegen eine Gegenfläche zu pressen.

11. Walze nach einem der vorhergehenden Ansprüche,
dadurch **gekennzeichnet,**
daß das Tragrohr (12) von einem zusätzlich vorgesehenen drehfesten Träger (14) durchsetzt ist und daß das Tragrohr (12) und der Träger (14) endseitig miteinander verbunden sind.

12. Walze nach Anspruch 11,
dadurch **gekennzeichnet,**
daß zwischen dem Tragrohr (12) und dem Träger (14) wenigstens ein Stützelement (16, 18) vorgesehen ist, durch das das Tragrohr (12) radial am Träger (14) abgestützt ist.

13. Walze nach Anspruch 12,
dadurch **gekennzeichnet,**
daß wenigstens ein Stützelement (16, 18) zur Einstellung einer jeweiligen gegenseitigen radialen Verspannung von Tragrohr (12) und Träger (14) verstellbar ist.

14. Walze nach Anspruch 12 oder 13,
dadurch **gekennzeichnet,**
daß mehrere in Umfangsrichtung des Trägers (14) hintereinander liegende Stützelemente (16, 18) vorgesehen sind.

15. Walze nach einem der vorhergehenden Ansprüche,
dadurch **gekennzeichnet,**
daß mehrere in Richtung der Walzenachse (26) hintereinander liegende Stützelemente (16, 18) vorgesehen sind, um wenigstens eine axiale Reihe von Stützelementen (16, 18) zu bilden.

16. Walze nach einem der vorhergehenden Ansprüche,
dadurch **gekennzeichnet,**
daß wenigstens ein Stützelement durch eine Stellschraube (16) gebildet ist.

17. Walze nach Anspruch 16,
dadurch **gekennzeichnet,**
daß die Stellschraube (16) in eine in dem Tragrohr (12) vorgesehene radiale Gewindebohrung eingesetzt ist.

18. Walze nach einem der vorhergehenden Ansprüche,
dadurch **gekennzeichnet,**
daß wenigstens ein Stützelement durch ein Kraftelement (18) wie insbesondere eine Zylinder/Kolben-Einheit oder dergleichen gebildet ist.

19. Walze nach einem der vorhergehenden Ansprüche,
dadurch **gekennzeichnet,**
daß wenigstens ein verstellbares Stützelement (16, 18) zur Einstellung einer jeweiligen Durchbiegung des Tragrohres (12) vorgesehen ist.

20. Walze nach einem der vorhergehenden Ansprüche,
dadurch **gekennzeichnet,**
daß der das Tragrohr (12) durchsetzende drehfeste Träger (14) ebenfalls rohrförmig ausgebildet ist.

21. Walze nach einem der vorhergehenden Ansprüche,
dadurch **gekennzeichnet,**
daß der Walzenmantel (20) an seinen Enden durch rotierbare Spannscheiben verschlossen ist.

22. Verwendung der Walze (10) nach einem der vorhergehenden Ansprüche als Leitwalze für ein Band (22) wie insbesondere ein Filzband, ein Siebband, ein Preßband und/oder dergleichen.

23. Verwendung der Walze (10) nach einem der Ansprüche 1 bis 21 als Preßwalze.

24. Verwendung der Walze (10) nach einem der Ansprüche 1 bis 21 als einem Trockenzylinder (50) zugeordnete Anpreßwalze in einer Maschine zur Herstellung einer Tissue- oder Hygienepapierbahn.
